# NEUE EUROPÄISCHE PATENTSCHRIFT

(11) **EP 2 492 062 B2**
(45) Veröffentlichungstag und Bekanntmachung des Hinweises auf die Entscheidung über den Einspruch: **18.08.2021**
(45) Hinweis auf die Patenterteilung: 31.10.2018
(21) Anmeldenummer: 12153415.0
(22) Anmeldetag: 01.02.2012
(51) Int. Cl.: B25J 9/16

(54) **Industrieroboter**
Industrial robot
Robot industriel

(30) Priorität: 02.02.2011 DE 102011003506
(43) Veröffentlichungstag der Anmeldung: 29.08.2012
(73) Patentinhaber: KUKA Deutschland GmbH, 86165 Augsburg (DE)
(72) Erfinder: Sedlmayr, Andreas, 82256 Fürstenfeldbruck (DE)
(74) Vertreter: Böss, Dieter Alexander

(56) Entgegenhaltungen:
- DE-A1-102009 014 766
- DE-A1-102009 018 403
- US-A1- 2006 071 625
- US-A1- 2008 065 257
- US-B1- 6 212 443
- S.-S. YOON et al.: "Dynamic Anti-Windup for Robot Systems with Friction", ICCAS2005: International Conference on Control, Automation and Systems, 5 June 2005 (2005-06-05), Korea Retrieved from the Internet: URL:https://pdfs.semanticscholar.org/05b4/ 4626caefcb218165267baec1d8bb774c0cf0.pdf

## Beschreibung

Die Erfindung betrifft einen Industrieroboter. Industrieroboter sind Arbeitsmaschinen, die zur automatischen Handhabung und/ oder Bearbeitung von Objekten mit Werkzeugen ausgerüstet werden können und in mehreren Bewegungsachsen beispielsweise hinsichtlich Orientierung, Position und Arbeitsablauf programmierbar sind. Industrieroboter weisen üblicherweise einen Roboterarm mit mehreren hintereinander angeordneten, über Gelenke und bezüglich Achsen bewegbaren Gliedern und programmierbare Steuerungen (Steuervorrichtungen) auf, die während des Betriebs die Bewegungsabläufe des Industrieroboters steuern bzw. regeln.

Im Betrieb des Industrieroboters oder bei einem manuellen Bewegen desselben ist es wünschenswert, dass der Roboter nicht mit einem Gegenstand kollidiert.

Die DE 10 2009 018 403 A1 offenbart ein Verfahren und eine Vorrichtung zur Regelung eines Manipulators. Für die Regelung sind Obergrenzen von Stellkräften oder eine Begrenzung eines maximalen Soll-Motorstroms in einem Stromregelkreis vorgesehen.

Die US 2008/0065257 A1 offenbart, die Koeffizienten eines PI-Reglers anzupassen. Die Veröffentlichung "Dynamic Anti-Windup for Robot Systems with Friction" von S.-S. Yoon, Y. Yamada, J.-K. Park and T.-W. Yoon in ICCAS2005: International Conference on Control, Automation and Systems, 2005, Korea beschreibt einen Regelungsalgorithmus bei dem zur Steuerung von Robotersystemen der Integralanteil eines Reglers unter Berücksichtigung von Reibungskräften im Rahmen einer dynamischen Anti-Windup-Regelüng begrenzt wird.

Die Aufgabe der Erfindung ist es, einen Industrieroboter derart auszuführen, dass die negativen Auswirkungen eines Kollidierens des Roboterarms mit einem Gegenstand zumindest abgeschwächt sind.

Die Aufgabe der Erfindung wird gelöst durch einen Industrieroboter gemäß dem Anspruch 1.

Der erfindungsgemäße Industrieroboter ist demnach eingerichtet, zumindest in einem Teilbetriebsmodus kraftgeregelt betrieben zu werden. Dazu ist in der Steuervorrichtung des erfindungsgemäßen Industrieroboters die Regelungsvorrichtung vorgesehen. Diese ist insbesondere als digitale Regelung ausgeführt. Die Kraftregelung ist vorzugsweise als ein im Betrieb des erfindungsgemäßen Industrieroboters auf der Steuervorrichtung laufendes Rechnerprogramm ausgeführt.

Die Regelungsvorrichtung umfasst zumindest einen Integral-Anteil (I-Anteil), der erfindungsgemäß aufgrund des Kriteriums begrenzt wird. Aufgrund der erfindungsgemäßen Begrenzung der Integration wird ein so genannter Anti-wind-up Effekt realisiert und somit das Einschwingverhalten der Regelungsvorrichtung wenn, dann nur kaum verschlechtert, jedoch gleichzeitig das maximal aufgebrachte Drehmoment der die Glieder des Roboterarms bewegenden Antriebe begrenzt. Dadurch wird es ermöglicht, einen potenziellen Schaden am Roboterarm zu verringern oder gar zu verhindern, wenn dieser unbeabsichtigt mit einem Gegenstand kollidiert.

Erfindungsgemäß ist die Regelungsvorrichtung eingerichtet, den Integral-Anteil dynamisch zu begrenzen, auf Grundlage einer Unsicherheit eines in der Steuervorrichtung gespeicherten, die dynamischen Eigenschaften des Roboterarms modellierenden dynamischen Modells des Industrieroboters.

Nach der erfindungsgemäßen Ausführungsform des Industrieroboters ist in dessen Steuervorrichtung ein dynamisches Modell des Roboterarms gespeichert, welches die dynamischen Eigenschaften desselben modelliert. Die dynamischen Eigenschaften des Roboterarms sind insbesondere einer Reibung, insbesondere einer Reibung der Getriebe der elektrischen Antriebe, zugeordnet. Die dynamischen Eigenschaften des Roboterarms können sich aber auch aufgrund der Schwerkraft und Massenträgheit ausgeübte Drehmomente auf die Glieder des Roboterarms beziehen. Gemäß dieser Ausführungsform des erfindungsgemäßen Industrieroboters kann die Regelungsvorrichtung insbesondere derart ausgeführt sein, aufgrund des dynamischen Modells und aufgrund der Winkelstellungen der Glieder des Roboterarms relativ zueinander das Soll-Drehmomente zu errechnen. Somit kann die Genauigkeit der der Soll-Kraft zugeordneten, von den elektrischen Antrieben aufzubringenden Drehmomente der elektrischen Antriebe verbessert errechnet bzw. geregelt werden.

Die Steuervorrichtung des erfindungsgemäßen Industrieroboters ist eingerichtet, den Integral-Anteil aufgrund einer Unsicherheit des dynamischen Modells dynamisch zu begrenzen. Der Roboterarm kann nicht absolut exakt mittels des dynamischen Modells modelliert werden, wodurch eine Unsicherheit entsteht. Diese Unsicherheit wird gemäß dieser Ausführungsform als das Kriterium zum Begrenzen des Integral-Anteils verwendet, wodurch erreicht wird, dass aufgrund des dynamischen Modells ein abweichend errechnetes Drehmoment zumindest teilweise wieder kompensiert wird.

Die Unsicherheit kann vorzugsweise als eine in der Steuervorrichtung gespeicherte Fehlerfunktion modelliert sein. Diese kann vorzugsweise einer Unsicherheit der modellierten Reibung des dynamischen Modells zugeordnet sein.

Die Unsicherheit der modellierten Reibung kann insbesondere einer aktuellen Winkelstellung der einzelnen Glieder des Roboterarms relativ zueinander, einer aktuellen Drehzahl der den elektrischen Antrieben zugeordneten elektrischen Motoren und/oder einem aktuellen Zustand und Wirkungsgrad den elektrischen Antrieben zugeordneten Getrieben zugeordnet sein. Insbesondere kann sich die Reibung des Getriebes oder der Getriebe in Abhängigkeit ihres Leistungsflusses bzw. ihrer Leistungsflüsse relativ stak unterscheiden, also ob das fragliche Getriebe rück- oder vortreibend betrieben wird.

Die Regelungsvorrichtung kann einen Kraftregler, dessen Eingangssignal die vom Roboterarm aufzubringende Soll-Kraft ist, eine dem Kraftregler nachgeschaltete inverse Jacobimatrix, dessen Ausgangssignal vom Roboterarm aufzubringende Kräfte und/oder Drehmomente im Gelenkraum des Roboterarms zugeordnete sind, und einen der inversen Jacobimatrix nachgeschalteten Regler aufweisen, welcher den Integral-Anteil aufweist, der aufgrund des Kriteriums insbesondere dynamisch begrenzt wird. Wobei hier die Jacobimatrix aus Beziehung zwischen der Geschwindigkeiten im Gelenkraum und der Geschwindigkeiten im kartesichem Raum am sogenannten Tool Center Point (TCP) resultiert.

Nach einer Ausführungsform des erfindungsgemäßen Industrieroboters ist dessen Regelungsvorrichtung derart ausgeführt, dass sie die Soll-Drehmomente als elektrische Soll-Ströme für die elektrischen Antriebe vorgibt.

Gemäß einer bevorzugten Variante des erfindungsgemäßen Industrieroboters weist dieser einen mit der Befestigungsvorrichtung gekoppelten Kraftmomentensensor auf, welcher eingerichtet ist, aufgrund eines manuellen Bewegens des Roboterarms auf die Befestigungsvorrichtung wirkende Kraft zu ermitteln, die Grundlage für die Soll-Kraft ist. Mittels dieser Variante ist es möglich, den Industrieroboter unterstützt durch seine Antriebe manuell zu bewegen.

Je nach Ausführungsform des erfindungsgemäßen Industrieroboters wird dieser zumindest in einem Teilbetriebsmodus mittels einer Kraftregelung betrieben.

Kollidiert der Roboterarm des erfindungsgemäßen Industrieroboters mit einem Gegenstand, dann kann die Kontaktkraft aus der kinetischen Energie, der Umgebungssteifigkeit plus des gerade von der Steuervorrichtung vorgegebenen Antriebsmomentes der elektrischen Antriebe resultieren.

Wird nun das von der Kraftregelung vorgegebene Antriebsmoment insbesondere mittels eines Anti-Windup-Verfahrens begrenzt, so kann die Kontaktkraft und/oder Geschwindigkeit nach dem Zeitmoment eines (meist nicht vorhersehbaren) Zusammenstoßes begrenzt werden. Es handelt sich um den Schaden, der nach dem Aufprall z.B. eine Millisekunde später (= Zeit eines Regeltaktes) entstehen könnte (d.h. insbesondere zeitlich gesehen nach Abbau insbesondere großer Teile der kinetischen Energie des Roboterarms, hervorgerufen durch das abrupte verlangsamen der Bewegung des Roboterarms bis möglicherweise in den Stillstand).

Dabei kann insbesondere der Integral-Anteil der Kraftregelung dynamisch begrenzt auf das Drehmoment, welches sich aus der Unsicherheit des Dynamikmodells ergibt, begrenzt werden. Die Unsicherheit kann als Fehlerfunktion (auch Störgrößenfunktion genannt) aufgestellt werden. Die Fehlerfunktion kann vorzugsweise überwiegend der ungefähren Modellabweichung des Getriebereibmoments, insbesondere abhängig von Drehzahl und Zustand und Wirkungsgrad der Leistungsflußrichtung (rück-oder vortreibendes Getriebe) entsprechen. Mit diesem erfindungsgemäßen Regelungskonzept wird der erfindungsgemäße Industrieroboter mit dem kollidierten Gegenstand besser vor Beschädigung geschützt.

Ein Ausführungsbeispiel der Erfindung ist exemplarisch in den beigefügten schematischen Figuren dargestellt. Es zeigen:
- Fig. 1: einen Industrieroboter mit einer Steuervorrichtung und einem Roboterarm und
- Fig. 2: ein Strukturbild einer Kraftregelvorrichtung des Industrieroboters.

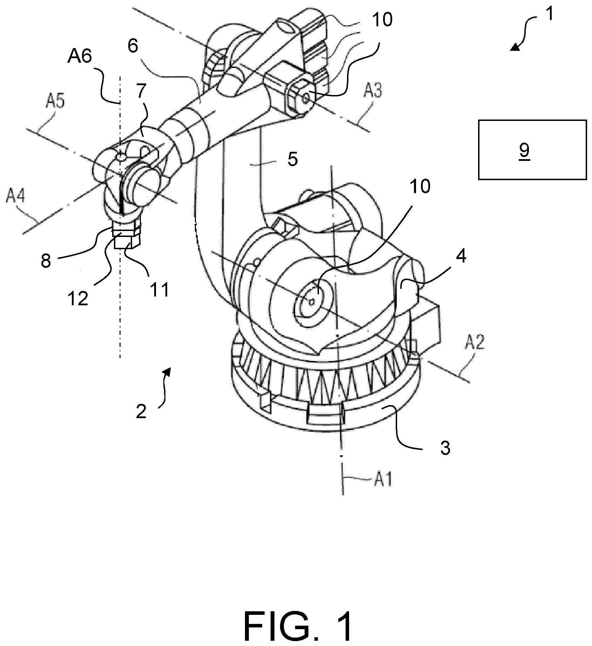

Die Fig. 1 zeigt in einer perspektivischen Darstellung einen Industrieroboter 1 mit einem Roboterarm 2.

Der Roboterarm 2 umfasst im Falle des vorliegenden Ausführungsbeispiels mehrere nacheinander angeordnete und mittels Gelenke verbundene Glieder. Bei den Gliedern handelt es sich insbesondere um ein ortsfestes oder bewegliches Gestell 3 und ein relativ zum Gestell 3 um eine vertikal verlaufende Achse A1 drehbar gelagertes Karussell 4. Weitere Glieder des Roboterarms 2 sind im Falle des vorliegenden Ausführungsbeispiels eine Schwinge 5, ein Ausleger 6 und eine vorzugsweise mehrachsige Roboterhand 7 mit einer als Flansch 8 ausgebildeten Befestigungsvorrichtung. Die Schwinge 5 ist am unteren Ende z.B. an einem nicht näher dargestellten Schwingenlagerkopf auf dem Karussell 4 um eine vorzugsweise horizontale Achse A2 schwenkbar gelagert. Am oberen Ende der Schwinge 5 ist wiederum um eine ebenfalls vorzugsweise horizontale Achse A3 der Ausleger 6 schwenkbar gelagert. Dieser trägt endseitig die Roboterhand 7 mit ihren vorzugsweise drei Achsen A4, A5, A6.

Um den Industrieroboter 1 bzw. dessen Roboterarm 2 automatisch zu bewegen, umfasst dieser in allgemein bekannter Weise mit einer Steuervorrichtung 9 verbundene elektrische Antriebe 26. In der Figur 1 sind nur einige der elektrischen Motoren 10 dieser Antriebe 26 gezeigt.

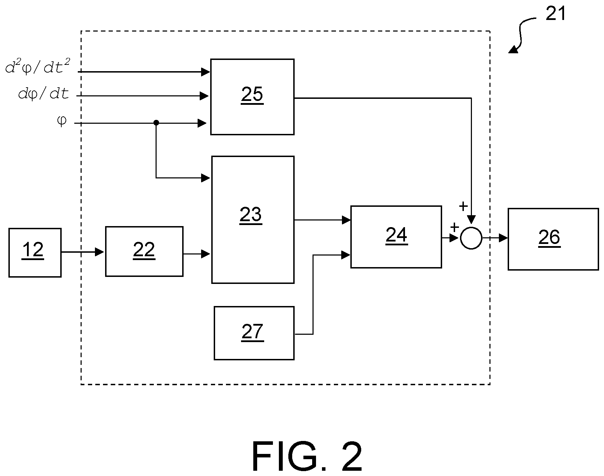

Im Falle des vorliegenden Ausführungsbeispiels wird der Industrieroboter 1 zumindest in einem Teilbetriebsmodus kraftgeregelt betrieben. Eine für diesen Teilbetriebsmodus bestimmte Kraftregelvorrichtung 21 ist in der Steuervorrichtung 9 hinterlegt, deren Strukturbild in der Fig. 2 gezeigt ist.

Der kraftgeregelte Teilbetriebsmodus kann z.B. während eines automatischen Bewegens des Roboterarms 2 gesteuert bzw. geregelt durch die Steuervorrichtung 9 ausgeführt werden.

Im Falle des vorliegenden Ausführungsbeispiels ist es insbesondere vorgesehen, dass der kraftgeregelte Teilbetriebsmodus im Rahmen eines manuellen bzw. handgeführten Bewegens des Roboterarms 2 z.B. im Rahmen einer Programmierung des Industrieroboters 1 durchgeführt wird. Für diesen Fall kann z.B. am Flansch 8 des Roboterarms 2 ein Griff 11 befestigt sein, mittels dem der Roboterarm 2 manuell bzw. handgeführt bewegt werden kann. Im oder am Flansch 8 bzw. im oder am Griff 11 kann ferner ein mit der Steuervorrichtung 9 verbundener Kraftmomentensensor 12 angeordnet sein, der eine auf den Flansch 8, insbesondere auf einen so genannten Tool Center Point des Roboterarms 2 bzw. des Griffs 11 wirkende Kraft und/oder Drehmoment ermittelt, das aufgrund des manuellen Bewegens auf den Roboterarm 2 bzw. dessen Flansch 8 wirkt.

Soll der Roboterarm 2 manuell bewegt werden, dann wird die von dem Kraftmomentensensor 12 ermittelte Kraft mit dem Faktor "-1" multipliziert. Das entstehende Signal ist ein Eingangssignal der Kraftregelvorrichtung 21 und wird insbesondere einem Kraftregler 22 der Kraftregelvorrichtung 21 zugeführt, der z.B. als ein PI-Regler ausgeführt ist.

Das Ausgangssignal des Kraftreglers 22 entspricht im Falle des vorliegenden Ausführungsbeispiels einem 6 dimensionalen Vektor, der Kraft- und Drehmomentenkomponenten umfasst, mit denen sich der Roboterarm 2 automatisch gesteuert durch die Steuervorrichtung 9 bewegen soll, sodass sich der Griff 11 bzw. dessen Tool Center Point entsprechend der manuell aufgebrachten Kraft bewegt.

Das Ausgangssignal des Kraftreglers 22 wird einem Block 23 der Kraftregelvorrichtung 21 zugeführt, der aufgrund des Ausgangssignals des Kraftreglers 22 und den aktuellen Winkelstellungen ϕ der Glieder des Roboterarms 2 relativ zueinander eine Transformation der Kraft- und Drehmomentkomponenten in den dem Fachmann im Prinzip bekannten sogenannten Gelenkraum transformiert. Dazu wird die sogenannte inverse Jacobimatrix verwendet. Die aktuellen Winkelstellungen ϕ der Glieder des Roboterarms 2 werden z.B. mittels geeigneter, z.B. am Roboterarm 2 angeordneter Winkelmessvorrichtungen, beispielsweise Resolvern, ermittelt und sind weitere Eingangssignale der Kraftregelvorrichtung 21.

Das Ausgangssignal des Blocks 23 ist das Eingangssignal eines weiteren Reglers 24 der Kraftregelvorrichtung 21, der ein integrierendes Verhalten aufweist und beispielsweise als PI (Proportional-Integral) Regler ausgeführt ist. Das Ausgangssignal des Reglers 24 ist den Drehmomenten zugeordnet, die die einzelnen elektrischen Antriebe 26 des Roboterarms 2 bzw. deren elektrische Motoren 10 aufbringen sollen.

Um z.B. die Schwerkraft des Roboterarms 2 und/oder durch Reibung der Gelenke, Getriebe usw. zumindest teilweise zu kompensieren, umfasst die Kraftregelvorrichtung 21 im Falle des vorliegenden Ausführungsbeispiels ein dynamisches Modell 25, welches das dynamische Verhalten des Roboterarms 2 modelliert. Dieses wird verwendet, um aufgrund der aktuellen Winkelstellungen ϕ der Glieder des Roboterarms 2 relativ zueinender, deren erste Ableitungen nach der Zeit *d*ϕ/*dt* und deren zweite Ableitungen nach der Zeit *d²*ϕ/*dt²* kompensierende Drehmomente zu berechnen, die die elektrischen Antriebe 26 des Roboterarms 2 bzw. deren elektrische Motoren 10 aufbringen sollen, um z.B. die Reibung oder die Auswirkungen der Gravitation zumindest teilweise zu kompensieren. Die errechneten kompensierenden Drehmomente werden zu den mittels des Reglers 24 berechneten Drehmomenten addiert, wodurch Soll-Drehmomente errechnet werden, welche die elektrischen Antriebe 26 des Roboterarms 2 bzw. deren Motoren 10 aufbringen sollen. Die Soll-Drehmomente, die z.B. in entsprechende elektrische Soll-Ströme für die elektrischen Antriebe 26 bzw. der Motoren 10 umgerechnet werden, sodass beispielsweise die elektrischen Antriebe 26 in einer für den Fachmann bekannten Weise entsprechend geregelt werden können, sind die Ausgangssignale der Kraftregelvorrichtung 21.

In der Praxis weist das dynamische Modell 25 Unsicherheiten auf bzw. kann nur mit einer beschränkten Genauigkeit erstellt und/oder implementiert werden. Um bei einem Zusammenstoß der Struktur des Roboterarms 2 mit einem Gegenstand einen zu erwartenden Schaden am Roboterarm 2 und/oder am Gegenstand zumindest zu verkleinern, ist es im Falle des vorliegenden Ausführungsbeispiels vorgesehen, das Ausgangssignal des Reglers 24 zu begrenzen. Dies wird im Falle des vorliegenden Ausführungsbeispiels dadurch erreicht, indem der integrierende Anteil (I-Anteil) des Reglers 24 begrenzt wird (Anti Wind-up).

Im Falle des vorliegenden Ausführungsbeispiels wird der I-Anteil des Reglers 24 dynamisch begrenzt und/oder für jeden elektrischen Antrieb 12 individuell begrenzt. Insbesondere ist es vorgesehen, dass der I-Anteil aufgrund der Unsicherheit bzw. Fehlerhaftigkeit des dynamischen Modells 25 begrenzt wird. Vorzugsweise wird dabei eine nicht exakt modellierte Reibung des Roboterarms 2, d.h. Reibungen der Gelenke, gegebenenfalls verwendeter Getriebe usw. berücksichtigt. Auch kann eine aktuelle Winkelstellung der einzelnen Glieder des Roboterarms 2 relativ zueinander und/oder der aktuellen Drehzahl der einzelnen elektrischen Motoren 10 und/oder des aktuellen Zustands und Wirkungsgrads, abhängig der Leistungsflussrichtung (rück- oder vortreibendes Getriebe), berücksichtigt werden.

Im Falle des vorliegenden Ausführungsbeispiels wird die besagte Unsicherheit als Fehlerfunktion 27 bzw. Störgrößenfunktion aufgestellt. Diese kann überwiegend der ungefähren Modellabweichung der einzelnen Getriebemomente der elektrischen Antriebe 26 zugeordnet sein, insbesondere abhängig von der aktuellen Drehzahl der fraglichen elektrischen Motoren 10 und/oder ob das fragliche Getriebe rücktreibend oder vortreibend betrieben wird.

Die Fehlerfunktion 27 kann insbesondere empirisch ermittelt werden, indem der fragliche Roboterarm 2 für verschiedene Achsenstellungen und Bewegungen der einzelnen Glieder des Roboterarms 2 untersucht bzw. die Reibungen ermittelt oder zumindest abgeschätzt wurden. Die Fehlerfunktion kann auch aufgrund statistischer Methoden ermittelt worden sein, indem beispielsweise mehrere Roboterarme 2 desselben Typs bzw. derselben Gattung untersucht wurden.

Der kraftgeregelte Teilbetriebsmodus kann auch während des Automatikbetriebs des Industrieroboters 1 wie obenstehend beschrieben durchgeführt werden, d.h. der I-Anteil des Reglers 24 kann wie beschrieben begrenzt sein. Im Automatikbetrieb wird jedoch keine Kraft aufgrund eines manuellen Bewegens des Roboterarms 2 gemessen, welche als Eingangssignal für den Kraftregler 22 bzw. der Kraftregelvorrichtung 21 verwendet wird. Im fraglichen Automatikbetrieb kann dem Kraftregler 22 bzw. der Kraftregelvorrichtung 21 eine Soll-Kraft vorgegeben werden. Diese Soll-Kraft kann insbesondere eine vorgegebene Richtungskomponente aufweisen, die insbesondere einer Richtung entspricht, in welcher der Tool Center Point die vorgegeben Kraft ausüben soll.

## Patentansprüche

1. Industrieroboter, aufweisend
- einen Roboterarm (2), der mehrere hintereinander angeordnete, bezüglich Achsen (A1-A6) bewegbare Glieder (4-7), zum Bewegen der Glieder (4-8) vorgesehene elektrische Antriebe (26), und eine zum Befestigen eines Endeffektors vorgesehene Befestigungsvorrichtung (8) aufweist, und
- eine mit den elektrischen Antrieben (26) verbundene Steuervorrichtung (9), die eingerichtet ist, die elektrischen Antriebe (26) für eine Bewegung der Glieder (4-7) zumindest in einem Teilbetriebsmodus mittels einer Regelungsvorrichtung (21) kraftgeregelt anzusteuern, wobei die Regelvorrichtung (21) aufgrund einer vom Roboterarm (2) aufzubringenden Soll-Kraft von den Antrieben (26) aufzubringende Soll-Drehmomente ermittelt und zumindest einen Integral-Anteil aufweist, **dadurch gekennzeichnet, dass** die Regelvorrichtung (21) eingerichtet ist, den Integral-Anteil auf Grundlage einer Unsicherheit eines in der Steuervorrichtung (9) gespeicherten, die dynamischen Eigenschaften des Roboterarms (2) modellierenden dynamischen Modells (25) des Industrieroboters (1) zu begrenzen.

2. Industrieroboter nach Anspruch 1, bei dem das Kriterium einer Reibung des Roboterarms (2), insbesondere einer Reibung von Getrieben der elektrischen Antriebe (26) zugeordnet ist.

3. Industrieroboter nach Anspruch 2, dessen Steuervorrichtung (9) eingerichtet ist, die aktuelle Reibung der Getriebe zu modellieren, insbesondere unter Berücksichtigung eines aktuellen Leistungsflusses des fraglichen Getriebes und/oder einer Drehzahl des dem fraglichen Getriebe zugeordneten elektrischen Motors (10) des fraglichen elektrischen Antriebs (26).

4. Industrieroboter nach einem der Ansprüche 1 bis 3, bei dem das dynamische Modell (25) des Roboterarms (2) die dynamischen Eigenschaften des Roboterarms (2) als eine Reibung und/oder aufgrund der Schwerkraft ausgeübte Drehmomente auf die Glieder des Roboterarms (2) modelliert.

5. Industrieroboter nach einem der Ansprüche 1 bis 4, bei dem die Regelungsvorrichtung (21) derart ausgeführt ist, aufgrund des dynamischen Modells (25) und aufgrund der Winkelstellungen der Glieder des Roboterarms (2) relativ zueinander die Soll-Drehmomente zu errechnen.

6. Industrieroboter nach einem der Ansprüche 1 bis 5, bei dem die Unsicherheit als eine in der Steuervorrichtung (9) gespeicherte Fehlerfunktion (27) modelliert ist, welche insbesondere einer Unsicherheit der modellierten Reibung des dynamischen Modells (25) zugeordnet ist.

7. Industrieroboter nach Anspruch 6, bei dem für die Unsicherheit der modellierten Reibung eine aktuelle Winkelstellung der einzelnen Glieder des Roboterarms (2) relativ zueinander und/oder eine aktuelle Drehzahl der den elektrischen Antrieben (26) zugeordneten elektrischen Motoren (10) und/oder ein aktueller Zustand und Wirkungsgrads der elektrischen Antrieben (26) zugeordneten Getriebe berücksichtigt ist.

8. Industrieroboter nach einem der Ansprüche 1 bis 7, dessen Regelungsvorrichtung (21) einen Kraftregler (22), dessen Eingangssignal die vom Roboterarm (2) aufzubringende Soll-Kraft ist, eine dem Kraftregler (22) nachgeschaltete inverse Jacobimatrix (23), dessen Ausgangssignal vom Roboterarm (2) aufzubringende Kräfte und/oder Drehmomente im Gelenkraum des Roboterarms (2) zugeordnet ist, und einen der inverse Jacobimatrix (23) nachgeschalteten Regler (24), welcher den Integral-Anteil aufweist, der aufgrund des Kriteriums dynamisch begrenzt wird, aufweist.

9. Industrieroboter nach einem der Ansprüche 1 bis 8, dessen Regelungsvorrichtung (21) derart ausgeführt ist, die Soll-Drehmomente als elektrische Soll-Ströme für die elektrischen Antrieb (26) vorzugeben.

10. Industrieroboter nach einem der Ansprüche 1 bis 9, aufweisend einen mit der Befestigungsvorrichtung (8) gekoppelten Kraftmomentensensor (12), welche eingerichtet ist, eine aufgrund eines manuellen Bewegens des Roboterarms (2) auf die Befestigungsvorrichtung (8) wirkende Kraft zu ermitteln, die Grundlage für die Soll-Kraft ist.

## Claims

1. Industrial robot, comprising
- a robot arm (2), with a plurality of limbs (4-7) which are arranged one behind the other and can be moved relative to axes (A1-A6), electric drives (26) for moving the limbs (4-8), and a securing device (8) for securing an end effector, and
- a controller (9) connected to the electric drives (26), which controller (9) is configured to control by power-regulation the electric drives (26) for a movement of the limbs (4-7) at least in a partial operating mode by means of a feedback control device (21), wherein the feedback control device (21) due to a nominal force to be applied by the robot arm (2) determines nominal torques to be applied by the drives (26) and comprises at least one integral component, **characterised in that** the feedback control device (21) is configured to limit the integral component on the basis of an uncertainty of a dynamic model (25) of the industrial robot (1) saved in the controller (9) and modelling the dynamic properties of the robot arm (2).

2. Industrial robot according to claim 1, wherein the criterion is assigned to a friction of the robot arm (2), in particular a friction of gears of the electric drives (26).

3. Industrial robot according to claim 2, the controller (9) of which is configured to model the current friction of the gear, in particular taking into consideration the current power flow of the gear in question and/or a speed of the electric motor (10) assigned to the gear in question of the electric drive (26) in question.

4. Industrial robot according to any of claims 1 to 3, wherein the dynamic model (25) of the robot arm (2) models the dynamic properties of the robot arm (2) as a friction and/or torques exerted by gravity on the limbs of the robot arm (2).

5. Industrial robot according to any of claims 1 to 4, wherein the feedback control device (21) is configured to calculate the nominal forces on the basis of the dynamic model (25) and on the basis of the angular positions of the limbs of the robot arm (2) relative to one another.

6. Industrial robot according to any of claims 1 to 5, wherein the uncertainty is modelled as an error function (27) saved in the controller (9), which is assigned in particular to an uncertainty of the modelled friction of the dynamic model (25).

7. Industrial robot according to claim 6, wherein for the uncertainty of the modelled friction a current angular position of the individual limbs of the robot arm (2) relative to one another and/or a current speed of the electric motors (10) assigned to the electric drives (26) and/or a current state and efficiency of the gears assigned to the electric drives (26) is/are taken into account.

8. Industrial robot according to any of claims 1 to 7, the feedback control device (21) of which comprises a power controller (22), the input signal of which is the nominal force to be applied by the robot arm (2), an inverse Jacobian matrix (23) downstream of the power controller (22), the output signal of which is assigned forces and/or torques to be applied by the robot arm (2) in the joint area of the robot arm (2), and a controller (24) downstream of the inverse Jacobian matrix (23) which controller comprises the integral component which is limited dynamically on the basis of the criterion.

9. Industrial robot according to any of claims 1 to 8, the feedback control device (21) of which is designed to specify the nominal torques as electric nominal currents for the electric drive (26).

10. Industrial robot according to any of claims 1 to 9, comprising a moment of force sensor (12) coupled to the securing device (8), which is configured to determine a force acting on the securing device (8) on the basis of a manual movement of the robot arm (2) which force is the basis of the nominal force.

## Revendications

1. Robot industriel comportant
- un bras de robot (2) qui présente plusieurs membres (4-7) agencés les uns derrière les autres, mobiles par rapport à des axes (A1-A6), des entraînements électriques (26) prévus pour mouvoir les membres (4-8), et un dispositif de fixation prévu pour fixer un effecteur d'extrémité, et
- un dispositif de commande (9) relié aux entraînements électriques (26) qui est prévu pour piloter les entraînements électriques (26) par force appliquée, au moyen d'un dispositif de régulation (21), pour un mouvement des membres (4-7) au moins dans un mode de fonctionnement partiel, le dispositif de régulation (21), en raison d'une force de consigne à appliquer par le bras de robot (2), déterminant des couples de consigne à appliquer par les entraînements (26) et présentant au moins une partie intégrante, **caractérisé en ce que** le dispositif de régulation (21) est prévu pour limiter la partie intégrante sur la base d'une incertitude d'un modèle (25) dynamique du robot industriel (1) mémorisé dans le dispositif de commande (9) et modélisant les propriétés dynamiques du bras de robot (2).

2. Robot industriel selon la revendication 1, dans lequel le critère est associé à une friction du bras de robot (2), en particulier à une friction d'engrenages des entraînements électriques (26).

3. Robot industriel selon la revendication 2, dont le dispositif de commande (9) est prévu pour modeler la friction actuelle des engrenages, en particulier en tenant compte d'un flux de puissance actuel de l'engrenage en question et/ou d'une vitesse de rotation du moteur électrique (10) dudit entraînement électrique (26) en question, qui est associé audit engrenage en question.

4. Robot industriel selon l'une des revendications 1 à 3, dans lequel le modèle dynamique (25) du bras de robot (2) modélise les propriétés dynamiques du bras de robot (2) sous la forme d'une friction et/ou des couples exercés en raison de la pesanteur sur les membres du bras de robot (2).

5. Robot industriel selon l'une des revendications 1 à 4, dans lequel le dispositif de régulation (21) est réalisé de manière à calculer les couples de consigne en raison du modèle dynamique (25) et en raison des positions angulaires des membres du bras de robot (2) les uns par rapport aux autres.

6. Robot industriel selon l'une des revendications 1 à 5, dans lequel l'incertitude est modelée en tant qu'un dysfonctionnement (27) mémorisé dans le dispositif de commande (9), qui est associé en particulier à une incertitude de la friction modélisée du modèle dynamique (25).

7. Robot industriel selon la revendication 6, dans lequel pour l'incertitude de la friction modélisée, on peut tenir compte d'une position angulaire actuelle des membres individuels du bras de robot (2) les uns par rapport aux autres et/ou d'une vitesse de rotation actuelle des moteurs électriques (10) associés aux entraînements électriques et/ou d'un état actuel et de l'efficacité d'engrenages associés aux entraînements électriques (26).

8. Robot industriel selon l'une des revendications 1 à 7, dont le dispositif de régulation (21) présente un régulateur de force (22), dont le signal d'entrée est la force de consigne à appliquer par le bras de robot (2), une matrice jacobienne (23) montée en aval du régulateur de force (22), dont le signal de sortie est associé à des forces à appliquer par le bras de moteur (2) et/ou à des couples dans l'espace de l'articulation du bras de moteur (2), et présente un régulateur (24) monté en aval de la matrice jacobienne inverse (23), qui présente la partie intégrante qui est dynamiquement limitée sur la base du critère.

9. Robot industriel selon l'une des revendications 1 à 8, dont le dispositif de régulation (21) est réalisé de telle sorte que les couples de consigne sont fixés en tant que courants électriques de consigne pour les entraînements électriques (26).

10. Robot industriel selon l'une des revendications 1 à 9, présentant un capteur de couple de force (12) accouplé au dispositif de fixation (8), qui est prévu pour déterminer une force agissant sur le dispositif de fixation (8), en raison d'un mouvement manuel du bras de moteur (2), force qui est la base pour la force de consigne.
